# EUROPEAN PATENT SPECIFICATION

(11) **EP 1 031 104 B1**
(45) Date of publication and mention of the grant of the patent: **16.05.2007**
(21) Application number: 98954849.0
(22) Date of filing: 11.11.1998
(51) Int. Cl.: G06F 13/00

(54) **SYSTEM FOR TRANSMITTAL AND RECEIPT OF INFORMATION**
INFORMATIONSÜBERTRAGUNGS- UND EMPFANGSVERGAHREN
SYSTEME D'EMISSION ET DE RECEPTION D'INFORMATIONS

(30) Priority: 12.11.1997 NL 1007525
(43) Date of publication of application: 30.08.2000
(73) Proprietor: MMP Obec, 5612 AX Eindhoven (NL)
(72) Inventor: DIEBEN, Ebo, Paul, NL-5611 KL Eindhoven (NL)
(74) Representative: Van Breda, Jacobus
(86) International application number: PCT/NL1998/000651
(87) International publication number: WO 1999/024926

(56) References cited:
- EP-A- 0 375 138
- EP-A- 0 375 139
- EP-A- 0 471 639
- US-A- 5 493 692

## Description

The invention relates to a method for the transmittal and receipt of data making use of an electronic data storage device for the electronic storage of data, associated with distributed communication means for procuring data from and sending data to the electronic data storage device, whereby the electronic data storage device comprises at least one access reference identifying an intended recipient of data, wherein the data in the electronic data storage device is individualized with respect to the intended recipient, and wherein access to the individualized data in the electronic data storage device is released to one of the communication means after both a file reference relating to said individualized data and a reference identical with the access reference has been transmitted by means of said communication means to the electronic data storage device.

EP-A-0 375 138 describes a method for the restriction of the amount of electronic messages distributed via a computer network. Each message is accompanied by an electronic profile relating to the recipient of the message, such as security classification, management level or address, or possibly data with respect to the source and type of message. The profile is compared with a desired recipient profile that has been previously established. In this manner the routing of the messages can be automatically selected.

EP-A-0 375 139 relates to a method of notifying both the source and the intended recipient that the latter was insufficiently authorized to receive the electronic message via a computer network. In this manner the intended recipient is given another opportunity to attempt to obtain adequate authorization for receiving the message.

EP-A-0 471 639 relates to a method of distributing documents stored in a data processing system. To this end an identifying reference is created which is associated with a document. The reference identifies the document as well as the location where it is stored. The reference may subsequently be selectively transmitted to users. The users to whom the identifying reference is transmitted may be provided with different access levels. The system may also comprise a provision for the recordal of a user accessing a document designated by the reference.

US-A-5 493 692 relates to a method for selectively delivering electronic messages in a system of mobile and fixed devices, wherein additional data may be comprised in the messages for the preservation of privacy, indication of priority or other data. The publication further mentions that users wear so-called active badges the size of a credit card which transmit an infrared signal to allow the determination of a user's location. The user's location is then associated with the extent to which certain messages are then accessible to the user. The peripheral devices in the vicinity of the user are selected with respect to their suitability to receive a message intended for the user.

The disadvantage of the known forms of electronic data traffic is that they are associated with various problems. For example, it is a problem that the legal status of electronically transmitted data is not clear, or at least that it is doubtful how valuable as evidence data transmitted in this manner is. Also, there are question marks concerning the security aspect of such electronic data traffic, and it is usually not obvious whether a transmitted message actually has arrived at the recipient. However, an important advantage of electronic data traffic is that the transmitted data can be quickly, simply and effectively stored in an electronic data storage device belonging to the recipient, for optional further processing.

It is the object of the invention to avoid the disadvantages of these known systems for transmitting and receiving.

To this end the method according to the invention uses a message selected from the group comprising a letter, an e-mail, a facsimile, which is transmitted to an intended recipient over a channel separate from that of retrieval whereby the message is provided with the file reference so as to advise the intended recipient about the file reference by means of this separately transmitted message, and that the file reference is a machine-readable reference, and the communication means comprise an intelligent terminal, associated with which is a.device for reading the file reference and in that, after reading the file reference, the intelligent terminal creates a reference which is transmitted together with the file reference to the electronic data storage device in order to obtain access to the individualized data.

By means of this method for the transmittal and receipt of data it is then possible to safely transmit confidential data with the certainty that the respective data is only accessible to the recipient. Furthermore efficient processing of the respective data can take place by fairly simple means, while the appropriate access reference may be physically associated with the intelligent terminal, without the users of said terminal having to have this reference on their person, or even being required to know it.

The invention uses presently existing electronic data traffic in such manner so as to avoid the considerable disadvantage of the prior art systems wherein data is accessible for third parties. Only the recipient of the letter, facsimile or e-mail who approaches the data storage with both the correct file- and access-reference is able to access the respective individualized data.

Notably, a further advantage of the invention is that it induces economization. For example, a single brief note, facsimile or e-mail to the recipient or recipients may provide access to an extensive data file. In the case of correspondence, high mailing costs can be reduced, thereby also economizing on paper as far as those data are concerned that are communicated electronically only. This advantage becomes particularly obvious if the method for data transmittal and receipt according to the invention is applied for the dispatch of so-called mailings. An important further advantage is that when the recipient consults the electronic data storage device, confirmation of receipt becomes available to the transmitter due to the fact that the approach has been signalled electronically.

If the users are businesses, it is of advantage that the access reference is a reference adapted to the recipient of the letter, facsimile or e-mail such as, for instance, a trade registration number.

To further increase data traffic security, the electronic data storage device may further hold a pass-word, which is to be applied by the recipient and which is associated with the individualized data relating to the respective recipient and stored in the electronic data storage device, and in that access to the individualized data in the electronic data storage device is released to one of the communication means subsequent to transmitting with it a reference corresponding to the pass-word. Under these circumstances the system according to the invention may also safely be used in public surroundings.

The invention can, for example, be advantageously applied in such a manner that the electronic data storage device is part of internet. This affords the advantage of making use of an existing infrastructure, which is equipped to transmit data over long distances at only local telephone charges. This contains the total cost for transmitting large data packets.

Another preferred embodiment of the system for the transmittal and reception of data according to the invention is characterized in that the file reference on the letter or facsimile is a bar code, in that the electronic data storage device forms part of the internet, in that the communication means comprise a personal computer with which a bar code reader is associated as well as a chip card reader, and in that a chip card is used on which a reference is stored which reference is the same as the access reference, and possibly other references to protect access to the individualized data intended for the respective recipient. This allows the recipient much freedom of movement because his chip card carries the necessary data. This chip card can be read at any user location by a chip card reader associated with a personal computer able to access the internet, so that basically the individualized data in the electronic data storage device are approachable from any location. To increase security, this device also comprises a further code in the form of a pass word. It is further desirable to combine the above-mentioned bar code with a URL.

The invention is further embodied in a letter to be applied in the method according to the invention, which letter is enclosed in a sealed window envelope such as to allow the file reference to be read through the window of the window envelope. In this manner the staff in the post room is able to determine the sender of a letter without having to open it.

The person skilled in the art will find that the above specification clearly explains the appended claims embodying the invention and the exclusive rights requested therefor. Within the scope of said claims the above-explained inventive idea may be freely varied without departing from said inventive idea and without leaving the protective scope of the appended claims.

## Claims

1. A method for the transmittal and receipt of data making use of an electronic data storage device for the electronic storage of data, associated with distributed communication means for procuring data from and transmitting data to the electronic data storage device, whereby the electronic data storage device comprises at least one access reference identifying an intended recipient of data, wherein the data in the electronic data storage device is individualized with respect to the intended recipient, and wherein access to said individualized data in the electronic data storage device is released to one of the communication means after both a file reference relating to said individualized data, and a reference identical with the access reference has been transmitted by means of said communication means to the electronic data storage device, **characterized in that** a message selected from the group comprising a letter, an e-mail, a facsimile, is transmitted to an intended recipient over a channel separate from that of retrieval, whereby the message is provided with the file reference so as to advise the intended recipient about the file reference by means of this separately transmitted message, and **in that** the file reference is a machine-readable reference, and that the communication means is selected to comprise an intelligent terminal, associated with which is a device for reading the file reference and **in that**, after reading the file reference, the intelligent terminal creates a reference which is transmitted together with the file reference to the electronic data storage device in order to obtain access to the individualized data.

2. A method according to claim 1, **characterized in that** the access reference is a reference adapted to the recipient of the letter, facsimile or e-mail such as, for instance, a trade registration number.

3. A method according to one of the claims 1-2, **characterized in that** the electronic data storage device further holds a password, which is to be applied by the recipient and which is associated with the individualized data relating to the respective recipient and stored in the electronic data storage device, and **in that** access to the individualized data in the electronic data storage device is released to one of the communication means subsequent to transmitting with it a reference corresponding to the pass-word.

4. A method according to one of the preceding claims, **characterized in that** the electronic data storage device is part of internet.

5. A method according to claim 1, **characterized in that** the file reference on the letter or facsimile is a bar code, **in that** the electronic data storage device forms part of the internet, **in that** the communication means comprise a personal computer with which a bar code reader is associated as well as a chip card reader, and **in that** a chip card is used on which a reference is stored which reference is the same as the access reference, and possibly other references to protect access to the individualized data intended for the recipient.

6. A method according to claim 5, **characterized in that** a pass-word is used as a further reference for securing access.

7. A method according to claim 6 or 7, **characterized in that** the bar code is combined with a URL.

## Patentansprüche

1. Verfahren zum Übertragen und Empfangen von Daten, wobei das Verfahren eine elektronische Speichereinrichtung für das elektronische Speichern von Daten verwendet, verbunden mit verteilten Kommunikationsmitteln zum Beschaffen von Daten von der elektronischen Speichereinrichtung und zum Übertragen von Daten an die elektronischen Speichereinrichtung, wobei die elektronische Speichereinrichtung aufweist mindestens eine Zugriffsreferenz, von der ein beabsichtigter Datenempfänger identifiziert wird, wobei die Daten in der elektronischen Speichereinrichtung entsprechend des beabsichtigten Empfängers individualisiert werden und wobei der Zugriff auf die individualisierten Daten in der elektronischen Speichereinrichtung für eines der Kommunikationsmittel freigegeben wird, nachdem beides, eine Dateireferenz, welche sich auf die individualisierten Daten bezieht, und eine Referenz, welche identisch mit der Zugriffsreferenz ist, mittels der Kommunikationsmittel zu der elektronischen Speichereinrichtung übertragen worden ist, **dadurch gekennzeichnet, dass** eine Nachricht, ausgewählt aus der Gruppe, welche einen Brief, eine Email, ein Fax enthält, an einen beabsichtigten Empfänger über einen vom Empfangskanal getrennten Kanal übertragen wird, wobei die Nachricht mit der Dateireferenz versehen wird, so dass der beabsichtigte Empfänger mittels dieser getrennt übertragenen Nachricht über die Dateireferenz unterrichtet wird, und dass die Dateireferenz eine maschinenlesbare Referenz ist, und dass das Kommunikationsmittel so ausgewählt wird, dass es ein intelligentes Terminal aufweist, welchem eine Einrichtung zum Lesen der Dateireferenz zugeordnet ist, und, dass das intelligente Terminal nach dem Lesen der Dateireferenz eine Referenz erzeugt, welche zusammen mit der Dateireferenz an die elektronische Speichereinrichtung übertragen wird, so dass der Zugriff zu den individualisierten Daten erlangt wird.

2. Verfahren gemäß Anspruch 1,
**dadurch gekennzeichnet, dass** die Zugriffsreferenz eine an den Empfänger des Briefs, des Faxes oder der Email angepasste Referenz ist, wie beispielsweise eine Handelsregistriernummer.

3. Verfahren nach einem der Ansprüche 1 bis 2,
**dadurch gekennzeichnet, dass** die elektronische Datenspeichereinrichtung außerdem ein Passwort aufweist, wobei das Passwort durch den Empfänger angewendet werden soll und das Passwort den individualisierten Daten zugeordnet ist, welche sich auf den entsprechenden Empfänger beziehen und in der elektronischen Speichereinrichtung gespeichert sind, und, dass der Zugriff auf die individualisierten Daten in der elektronischen Speichereinrichtung an eines der Kommunikationsmittel freigegeben wird, nachdem mit dem Kommunikationsmittel eine dem Passwort zugehörige Referenz übertragen wurde.

4. Verfahren gemäß einem der vorangehenden Ansprüche,
**dadurch gekennzeichnet, dass** die elektronische Datenspeichereinrichtung Teil des Internets ist.

5. Verfahren gemäß Anspruch 1,
**dadurch gekennzeichnet, dass** die Dateireferenz auf dem Brief oder Fax ein Barcode ist, dass die elektronische Datenspeichereinrichtung einen Teil des Internets bildet, dass die Kommunikationsmittel einen Personalcomputer aufweisen, welchem ein Barcodeleser, wie auch ein Chipkartenleser zugeordnet ist, und dass eine Chipkarte verwendet wird, auf welcher eine Referenz gespeichert ist, wobei die Referenz die Gleiche wie die Zugriffsreferenz ist, sowie möglicherweise andere Referenzen zum Schützen des Zugriffs auf die für den Empfänger bestimmten individualisierten Daten.

6. Verfahren gemäß Anspruch 5,
**dadurch gekennzeichnet, dass** ein Passwort als eine weitere Referenz für die Sicherung des Zugriffs verwendet wird.

7. Verfahren gemäß Anspruch 6 oder 7,
**dadurch gekennzeichnet, dass** der Barcode mit einer URL kombiniert ist.

## Revendications

1. Procédé destiné à l'émission et à la réception de données utilisant un dispositif de stockage de données électronique pour le stockage électronique des données, associé à un moyen de communication distribué destiné à fournir des données en provenance du dispositif de stockage de données électronique et à émettre des données vers celui-ci, dans lequel le dispositif de stockage de données électronique comporte au moins une référence d'accès identifiant un receveur désiré des données, où les données dans le dispositif de stockage de données électronique sont individualisées par rapport au receveur désiré, et où un accès auxdites données individualisées dans le dispositif de stockage de données électronique est délivré à l'un des moyens de communication après qu'ont été émis à la fois une référence de fichier liée auxdites données individualisées, et une référence identique à la référence d'accès au moyen dudit moyen de communication vers le dispositif de stockage de données électronique, **caractérisé en ce qu'**un message sélectionné à partir du groupe comportant une lettre, un e-mail, un fac-similé, est transmis à un receveur désiré sur un canal séparé de celui de la récupération, moyen par lequel le message est fourni avec la référence de fichier de sorte à avertir le receveur désiré au sujet de la référence du fichier au moyen de ce message émis séparément, et **en ce que** la référence de fichier est une référence pouvant être lue par une machine, et que le moyen de communication est sélectionné pour comprendre un terminal intelligent, auquel est associé un dispositif destiné à lire la référence de fichier et **en ce que**, après avoir lu la référence de fichier, le terminal intelligent crée une référence qui est émise conjointement à la référence de fichier vers le dispositif de stockage de données électronique afin d'obtenir un accès aux données individualisées.

2. Procédé selon la revendication 1, **caractérisé en ce que** la référence d'accès est une référence adaptée au receveur de la lettre, du fac-similé ou de l'e-mail telle que, par exemple, un numéro d'enregistrement commercial.

3. Procédé selon l'une des revendications 1 et 2, **caractérisé en ce que** le dispositif de stockage de données électronique conserve de plus un mot de passe, qui doit être utilisé par le receveur et qui est associé aux données individualisées liées au receveur respectif et stocké dans le dispositif de stockage de données électronique, et **en ce qu'**un accès aux données individualisées dans le dispositif de stockage de données électronique est délivré à l'un des moyens de communication à la suite de l'émission avec lui d'une référence correspondant au mot de passe.

4. Procédé selon l'une des précédentes revendications, **caractérisé en ce que** le dispositif de stockage de données électronique fait partie d'Internet.

5. Procédé selon la revendication 1, **caractérisé en ce que** la référence de fichier de la lettre ou du fac-similé est un code à barres, **en ce que** le dispositif de stockage de données électronique fait partie d'Internet, **en ce que** le moyen de communication comprend un ordinateur personnel auquel est associé un lecteur de codes à barres tout comme un lecteur de cartes à puce, et **en ce qu'**une carte à puce est utilisée sur laquelle est stockée une référence, cette référence étant la même que la référence d'accès, et possiblement d'autres références afin de protéger l'accès aux données individualisées destinées au receveur.

6. Procédé selon la revendication 5, **caractérisé en ce qu'**un mot de passe est utilisé comme une référence supplémentaire afin de sécuriser un accès.

7. Procédé selon la revendication 6 ou 7, **caractérisé en ce que** le code à barres est combiné à une URL.
